(19) Europäisches Patentamt
European Patent Office
Office européen des brevets

(11) **EP 2 507 165 B1**

(12) **EUROPÄISCHE PATENTSCHRIFT**

(45) Veröffentlichungstag und Bekanntmachung des Hinweises auf die Patenterteilung:
**10.05.2017 Patentblatt 2017/19**

(21) Anmeldenummer: **10771113.7**

(22) Anmeldetag: **28.10.2010**

(51) Int Cl.:
**C01B 17/54** $^{(2006.01)}$ **C01B 17/76** $^{(2006.01)}$
**C01B 17/50** $^{(2006.01)}$ **C01B 17/60** $^{(2006.01)}$
**C01B 17/765** $^{(2006.01)}$

(86) Internationale Anmeldenummer:
**PCT/EP2010/066308**

(87) Internationale Veröffentlichungsnummer:
**WO 2011/067045 (09.06.2011 Gazette 2011/23)**

(54) **VERFAHREN ZUR AUFARBEITUNG VON SCHWEFELVERBINDUNGEN**

METHOD FOR REPROCESSING SULPHUR COMPOUNDS

PROCÉDÉ DE RETRAITEMENT DE COMPOSÉS SULFURÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.12.2009 EP 09014862**
**22.04.2010 DE 102010018172**
**09.09.2010 DE 102010040482**

(43) Veröffentlichungstag der Anmeldung:
**10.10.2012 Patentblatt 2012/41**

(73) Patentinhaber: **Chemetics, Inc.**
**Vancouver, British Columbia, V5M 0AS (CA)**

(72) Erfinder:
• **RISSE, Frank**
**42781 Haan (DE)**
• **NEWRZELLA, Arnold**
**46569 Hünxe (DE)**
• **FÖRTSCH, Dieter**
**42799 Leichlingen (DE)**
• **KÜRTEN, Martin**
**51465 Bergisch Gladbach (DE)**
• **PREDEL, Tim**
**50733 Köln (DE)**
• **RUNOWSKI, Thomas**
**40721 Hilden (DE)**

(74) Vertreter: **Beyer, Andreas et al**
**Wuesthoff & Wuesthoff**
**Patentanwälte PartG mbB**
**Schweigerstrasse 2**
**81541 München (DE)**

(56) Entgegenhaltungen:
EP-A2- 1 295 849    WO-A1-2008/052649
DE-B- 1 032 722    US-A- 2 003 442
US-A- 2 174 739    US-A- 3 475 120
US-A- 3 803 298

**EP 2 507 165 B1**

**Beschreibung**

Gegenstand der vorliegenden Erfindung ist ein Verfahren zur Aufarbeitung von Gasen, die neben Schwefelverbindungen Verbindungen mit gebundenem Stickstoff enthalten, insbesondere von schwefel- und stickstoffhaltigen Abgasen, die bei der Verbrennung zur Bildung von Stickoxiden ($NO_x$) neigen. Bei dem erfindungsgemäßen Verfahren wird Schwefelsäure als Produkt gewonnen.

Fossile Brennstoffe, wie Erdgas, Kohle, Ölsand, Ölschiefer und Erdöl enthalten organische und anorganische Schwefelverbindungen.

Die Entfernung dieser Schwefelverbindungen ist nicht nur für die Weiterverarbeitung des Rohmaterials notwendig, sondern dient vor allem auch der Verringerung der Luftverunreinigungen. Die gesetzlichen Anforderungen an die Restmengen von Schwefelverbindungen in Abgasen sind in den vergangenen Jahren erheblich gestiegen.

Für die Entfernung von Schwefelverbindungen aus Brennstoffen und Verbrennungsprodukten existiert eine Vielzahl von physikalischen und chemischen Umwandlungsprozessen.

Bei festen Brennstoffen werden die Schwefelverbindungen nach der Verbrennung im Kraftwerk als Schwefeldioxid durch eine Rauchgasentschwefelung vorwiegend mittels Kalkmilch absorbiert und in Calciumsulfit umgewandelt. Durch Oxidation mit im Abgas enthaltenem Restsauerstoff entsteht als Endprodukt Gips.

Bei flüssigen Brennstoffen, wie zum Beispiel Dieselkraftstoff oder leichtes Heizöl, sind maximal zulässige Schwefelgehalte vorgeschrieben. Die Entschwefelung dieser Brennstoffe wird bereits in den Raffinerien durchgeführt. Die im Rohöl vorhandenen Schwefelverbindungen werden nach der Destillation wiedergefunden, wobei die sogenannte Schwerölfraktion die höchsten Schwefelkonzentrationen aufweist. Die Entschwefelung erfolgt üblicherweise mit Hilfe von gasförmigem Wasserstoff. Die organischen Schwefelverbindungen werden dabei in Schwefelwasserstoff umgewandelt. Anschließend erfolgt die Entfernung des Schwefelwasserstoffs beispielsweise mittels einer Aminwäsche. Bei der Aminwäsche wird das als saures Gas *(sour gas / acid gas)* bezeichnete schwefelwasserstoffhaltige Prozessgas in einem Absorber an ein Amin gebunden. Es entsteht ein weitgehend von $H_2S$-befreites Gas *(sweet gas)* und eine $H_2S$-beladene Aminlösung. Im Regenerator erfolgt die thermische Trennung der sauren Bestandteile vom Amin, so dass das Amin erneut zur Wäsche eingesetzt werden kann. Das aufkonzentrierte, schwefelwasserstoffhaltige Gas (Amine Acid Gas, AAG) weist $H_2S$-Konzentrationen bis 90 Vol.-% auf. Dieses Gas wird üblicherweise zur Gewinnung von Schwefel nach dem Claus-Verfahren eingesetzt (siehe unten).

In der petrochemischen Industrie fällt ferner das sogenannte Sour Water Stripper Gas (SWSG) an, das eine Zusammensetzung von etwa gleichen molaren Anteilen an Schwefelwasserstoff, Wasser und Ammoniak aufweist.

Der hohe Anteil von gebundenem Stickstoff, der insbesondere im Sour Water Stripper Gas vorhanden ist, kann bei der Verbrennung zu unerwünschten Stickoxiden führen.

Auch bei der Verbrennung von Kohle oder Schweröl in Kraftwerken, bei der der Brennstoff zuvor unter Sauerstoffmangel vergast wird, entsteht ein schwefelwasserstoffhaltiges Synthesegas, welches vor der Verbrennung gereinigt wird.

Schwefelwasserstoff kommt außerdem in unterschiedlichen Konzentrationen im Erdölbegleitgas und im Erdgas mit einem Anteil von bis zu 30 Vol.-% und im Abgas von Kläranlagen mit einem Anteil von bis zu 5 Vol.-% Schwefelwasserstoff vor.

Die industrielle Verwertung von Schwefelwasserstoff ist begrenzt. Daher wird er üblicherweise zunächst in elementaren Schwefel und anschließend in Schwefelsäure umgewandelt.

Liegt der Schwefelwasserstoff im Abgas in konzentrierter Form vor, d.h. mit Gehalten von mehr als 20 Vol.-%, so ist die Schwefel-Gewinnung nach dem so genannten Claus-Verfahren wirtschaftlich.

Das Claus-Verfahren umfasst die folgenden Reaktionsschritte:

$$2\ H_2S + 3\ O_2 \rightarrow 2\ SO_2 + 2\ H_2O$$

$$2\ H_2S + SO_2 \rightarrow 3\ S + 2\ H_2O$$

Technisch erfolgt die Schwefelerzeugung nach dem Claus-Verfahren in mehreren Stufen. In einer ersten Stufe wird $H_2S$ in einem Verbrennungsapparat zu $SO_2$ verbrannt. Das dabei entstehende $SO_2$ reagiert in dem Verbrennungs-apparat bereits zu einem Großteil mit verbliebenem $H_2S$ zu Schwefel. Nach Abscheidung des Schwefels folgen eine oder mehrere katalytische Stufen zur weiteren Umsetzung von $H_2S$ mit $SO_2$.

Beim Claus-Verfahren ist die Einhaltung der Stöchiometrie wichtig, da sonst überschüssiges $SO_2$ oder $H_2S$ die Umwelt belasten kann.

Weiterhin erfolgt die Umsetzung von $H_2S$ mit $SO_2$ im Claus-Verfahren unvollständig. Um den Schwefelrückhaltungsgrad weiter zu steigern, sind diverse Verfahren entwickelt worden, die das Abgas hinter den katalytischen Stufen von Schwefelverbindungen reinigen. Das bekannteste ist das so genannte SCOT-Verfahren (Shell Claus Offgas Treating).

Bei niedrigeren Konzentrationen von Schwefelwasserstoff im Abgas kann Elementarschwefel beispielsweise über eine Oxidationswäsche (z.B. nach dem Stretford-Verfahren) gewonnen werden.

Der Großteil des aus $H_2S$-haltigen Abgasen gewonnenen Schwefels wird weiter zu Schwefelsäure verarbeitet. Daher ist es unter Umständen vorteilhaft, Schwefelwasserstoff direkt zu Schwefeldioxid zu verbrennen und dann unmittelbar weiter zu Schwefeltrioxid zu oxidieren und nicht den Umweg über Schwefel (Claus-Verfahren) zu gehen.

Das so genannte WSA-Verfahren (WSA = *wet sulfuric acid*) wandelt schwefelwasserstoffhaltige Abgase direkt in Schwefelsäure um. Hierbei wird das schwefelwasserstoffhaltige Gas zunächst verbrannt und das wasser- und schwefeldioxidhaltige Gas anschließend einer katalytischen Oxidation zugeführt. Das dabei entstehende $SO_3$ reagiert mit dem vorhandenen Wasser zu gasförmigem $H_2SO_4$. Flüssiges $H_2SO_4$ wird anschließend durch Kondensation der gasförmigen Schwefelsäure gewonnen. Die Verbrennung von $H_2S$ erfolgt mit Luft im ungekühlten Verbrennungsofen (Sulphur 312, Sept. /Okt. 2007, Seiten 80-85).

Großtechnisch erfolgt die Herstellung von Schwefelsäure üblicherweise entweder durch Verbrennung von elementarem Schwefel oder durch Rösten von Sulfiden, die bei der Verhüttung von Erzen der Nichteisenmetalle (vor allem Kupfer, Zink und Blei) anfallen. Das entstehende $SO_2$ wird dann üblicherweise in einem Kontaktverfahren katalytisch zu $SO_3$ oxidiert. Im Gegensatz zum WSA-Verfahren erfolgt die katalytische Umsetzung "trocken", d.h. in Abwesenheit signifikanter Mengen an Wasser. Anschließend wird Schwefeltrioxid üblicherweise in Schwefelsäure absorbiert. Die dabei entstehende hochkonzentrierte Schwefelsäure kann mit Wasser verdünnt und so Schwefelsäure mit jeder beliebigen Konzentration hergestellt werden. Handelsübliche Schwefelssäure hat eine Konzentration von mindestens 96 Gew.-% an $H_2SO_4$, da bei geringeren Konzentrationen die Korrosivität gegenüber vielen Materialien stark zunimmt.

Verwendung findet Schwefelsäure beispielsweise in der Herstellung von Düngemitteln, in der Petrochemie, der Raffinerietechnik, der Chemie, der Farbstoffherstellung, im Bereich des Erzaufschlusses und in der Metallurgie.

Zusätzlich zu schwefelwasserstoffhaltigen Gasen fallen in der petrochemischen Industrie noch eine Reihe von weiteren schwefelhaltigen Abgasen an, welche ebenfalls aufgrund der Umweltrichtlinien (z.B. Bundes-Immissionsschutzgesetz) behandelt werden müssen.

Zu nennen sind beispielsweise schwefelhaltige Abgase aus einem Kalziner, die eine relativ hohe Konzentration an $SO_2$ (bis zu 10000 ppm) aufweisen.

Darüber hinaus fallen hohe Mengen an Rauchgasen in Verbrennungsprozessen an, welche ebenfalls beträchtliche Konzentrationen an $SO_2$ aufweisen können. Diese werden bisher gemäß dem oben erwähnten Rauchgasentschwefelungsverfahren üblicherweise mit Kalkmilch behandelt, wobei große Mengen an Gips anfallen.

Das beim Regenerationsschritt eines Fluid Catalytic Crackers in der Erdöl verarbeitenden Industrie anfallende Abgas enthält neben nennenswerten Anteilen an $SO_2$ als schwefelhaltige Verbindung noch Anteile an oxidierbaren Bestandteilen wie Kohlenmonoxid sowie höhere Anteile an Stickoxiden, so dass auch hier eine Nachverbrennung erforderlich ist.

DE1032722 A offenbart ein Verfahren zur Herstellung schwefeldioxidhaltiger Gase durch Verbrennung von Schwefel und Schwefelwasserstoff in einer Reaktionsphase und bei beliebigen Mischungsverhältnissen dieser beiden Stoffe unter gleichzeitigem Zusatz eines sauerstoffhaltigen Gases in einen Verbrennungsraum, wobei je ein Brenner für Schwefel und Schwefelwasserstoff oder auch mehrere verwendet werden.

EP1295849 A2 betrifft ein Verfahren zur kontinuierlichen Herstellung von Oleum einer Konzentration von 10 bis 45 Gew.-% $SO_3$ und / oder Schwefelsäure einer Konzentration von 94 bis 100 Gew.-% $H_2SO_4$ durch Verbrennung von Schwefel mit Luftsauerstoff nach dem Prinzip der überstöchiometrischen Verbrennung, Abkühlung der entstandenen schwefeldioxidhaltigen Gasen auf 350 °C bis 500 °C, katalytische Umsetzung dieser abgekühlten Gase zu schwefeltrioxidhaltigen Gasen an einem vanadiumhaltigen Katalysator unter Anwendung der Einfach- oder Doppelkontaktkatalyse, Absorption der schwefeltrioxidhaltigen Gase nach Abkühlung, gegebenenfalls Abtrennung von Flüssigkeiten aus den Gasen nach der Absorption und Energierückgewinnung, wobei flüssiger Schwefel in den heißen Verbrennungsgasstrom senkrecht zur Hauptströmungsrichtung fächerförmig mittels einer oder mehrerer bimodaler Fächerdüsen eingedüst wird. Nachteilig ist jedoch die Bildung von NOx-Gasen. Zudem offenbart EP1295849 A2 die Verbrennung von flüssigem Schwefel und gibt keine Hinweise zur Verbrennung von schwefelhaltigen Abgasen.

Es kann somit festgehalten werden, dass ein fortwährender Bedarf besteht, Schwefelverbindungen aus verschiedenen Rohstoffen und Abgasen zu entfernen. Dabei sollte die Entschwefelung möglichst ohne großen energetischen und apparativen Aufwand erfolgen, da die entfernte Schwefelverbindung ein Produkt mit vergleichsweise niedrigem Wert ist. Die am häufigsten in der Industrie eingesetzte Schwefelverbindung ist Schwefelsäure, so dass ein Entschwefelungsverfahren, das Schwefelsäure zum Produkt hat, vorteilhaft ist. Der Umweg über Elementarschwefel, wie er heute bei der Entschwefelung in der Raffinerietechnik nach dem Claus-Verfahren üblich ist, ist weniger vorteilhaft.

Ausgehend vom beschriebenen Stand der Technik stellt sich daher die Aufgabe, ein Verfahren zur Aufarbeitung schwefelhaltiger Ausgangsstoffe, insbesondere von Abgasen bereitzustellen, bei dem Schwefelsäure als Produkt gewonnen wird. Das Verfahren soll kostengünstig in der Bereitstellung und im Betrieb sein. Es soll insbesondere der wirtschaftlichen Verwertung von schwefelhaltigen Prozessgasen aus der Entschwefelung von Rohstoffen der Raffinerietechnik und der Abgasreinigung dienen. Das Verfahren soll geeignet sein, schwefelhaltige Ausgangsstoffe mit einem nicht zu vernachlässigenden Anteil an Stickstoffverbindungen, die bei der Verbrennung unerwünschte Stickoxide bilden können, zu verarbeiten. Dem Verfahren sollen nach Möglichkeit schwefelhaltige Ausgangsstoffe mit variabler Zusammensetzung zuführbar sein, ohne dass dies Einfluss auf das Produkt hat. Die bei der Raffinerie anfallenden Schwefelverbindungen weisen beispielsweise unterschiedliche Mengen an Wasser auf bzw. führen bei der Verbrennung zu unterschiedlichen Wassergehalten. Ein variabler Wassergehalt kann jedoch zu unterschiedlichen Schwefelsäurekonzentrationen führen, was verhindert werden sollte.

Erfindungsgemäß wird diese Aufgabe durch ein Verfahren gemäß dem unabhängigen Anspruch 1 gelöst. Bevorzugte Ausführungsformen finden sich in den abhängigen Ansprüchen.

Gegenstand der vorliegenden Erfindung ist daher ein kontinuierliches Verfahren, bei dem verschiedene schwefelhaltige Ausgangsstoffe mit Sauerstoff unter Bildung von Schwefelsäure kontinuierlich miteinander umgesetzt werden.

Das erfindungsgemäße Verfahren umfasst die aufeinander folgenden Schritte

I. Verbrennen von schwefelhaltigen Ausgangsstoffen, die mindestens eine schwefelhaltige Verbindung oder elementaren Schwefel oder Schwefeldioxid sowie stickstoffhaltige Verbindungen enthalten, in einem Verbrennungsapparat unter Bildung eines $SO_2$- und $H_2O$-haltigen Prozessgases,

II. Trocknen des Prozessgases,

III. katalytisches Oxidieren von $SO_2$ zur $SO_3$ in einer ersten Kontaktstufe,

IV. Absorbieren von $SO_3$,

V. gegebenenfalls Durchlaufen weiterer Kontaktstufen zur weiteren katalytischen Oxidation von $SO_2$ zu $SO_3$ mit gegebenenfalls anschließender Absorption von $SO_3$.

Die Verbrennung in Schritt I findet in einem nicht-adiabaten Verbrennungsapparat statt, der mindestens einen Einlass für das sauerstoffhaltige Verbrennungsgas und mindestens einen Auslass für das gewonnene Prozessgas aufweist. Zwischen dem Einlass und dem Auslass befinden sich mindestens zwei aufeinanderfolgende Verbrennungszonen. Jeder Verbrennungszone ist ein Wärmeübertrager zur Kühlung des Prozessgases nachgeschaltet. Zusätzlich verfügt der Verbrennungsapparat über eine Wandkühlung. Das sauerstoffhaltige Verbrennungsgas wird durch den Einlass in den Verbrennungsapparat gefördert und durchläuft nacheinander die Verbrennungszonen. In die Verbrennungszonen werden die schwefelhaltigen Ausgangsstoffe eingedüst, wo sie verbrennen.

Die Dosierung der Ausgangsstoffe und die Kühlung der Verbrennungszonen werden so eingestellt, dass in den einzelnen Verbrennungszonen eine maximale Temperatur von 2000°C erreicht wird. Zusätzlich nimmt die maximale Temperatur in Strömungsrichtung von Verbrennungszone zu Verbrennungszone ab.

Der Verbrennungsapparat ist vorzugsweise ein wandgekühlter Wasserrohrkessel (Rohr-Steg-RohrKonstruktion). Wasserrohrkessel sind dem Fachmann der chemischen Verfahrenstechnik aus dem Stand der Technik bekannt (siehe z.B. Dubbel interaktiv, Taschenbuch für den Maschinenbau, L.6.1.1.). Die intensive Kühlung der Wandungen sorgt dafür, dass die Wandtemperatur unterhalb der durch Eisensulfidbildung gekennzeichneten Temperatur von etwa 480°C bleibt, auch wenn in den Verbrennungszonen Temperaturen von bis zu 2000°C herrschen. Die Wandtemperatur liegt vorzugsweise im Bereich von 200°C bis 400°C, besonders bevorzugt im Bereich von 240 bis 350°C.

Die Verbrennungsapparatur weist vorzugsweise eine Anzahl von Verbrennungszonen im Bereich von 2 bis 8, besonders bevorzugt im Bereich von 2 bis 5 auf.

Das erfindungsgemäße Verfahren ist dadurch gekennzeichnet, dass diejenigen schwefelhaltigen Ausgangsstoffe, die stickstoffhaltige Verbindungen enthalten, in die erste Verbrennungszone dosiert und dort verbrannt werden. Dabei erfolgt die Dosierung und Verbrennung dieser stickstoffhaltigen Ausgangsstoffe so, dass in der Flamme reduzierende Bedingungen herrschen. Das bedeutet, dass in der Flamme weniger Sauerstoff vorhanden ist, als für die vollständige Verbrennung des schwefel- und stickstoffhaltigen Ausgangsstoffes benötigt wird (unterstöchiometrische Bedingungen in Bezug auf Sauerstoff). Dabei herrschen in der Verbrennungszone im Mittel, und insbesondere am Ende der Verbrennungszone (in Strömungsrichtung gesehen) überstöchiometrische Bedingungen in Bezug auf Sauerstoff und die reduzierenden Bedingungen sind lokal auf die Flamme beschränkt. Durch diese reduzierenden Bedingungen in der Flamme wird die Bildung von Stickoxiden unterdrückt.

Die reduzierenden Bedingungen in der Flamme können beispielsweise durch Einsatz so genannter Low-$NO_x$-Brenner erzeugt werden, die dem Fachmann der Verbrennungs- und Energietechnik hinlänglich bekannt sind (siehe z.B. Prabir Basu et al., Boilers and Burner: Design and Theory, Mechanical Engineers Series, Springer-Verlag, 2000, Kapitel 9-9).

In den nachfolgenden Verbrennungszonen werden weitere schwefelhaltige Ausgangsstoffe, die keine oder vernachlässigbare Mengen an gebundenem Stickstoff enthalten, verbrannt.

Es ist auch denkbar, in der ersten Verbrennungszone neben den schwefelhaltigen Ausgangsstoffen mit gebundenem Stickstoff auch stickstofffreie, schwefelhaltige Ausgangsstoffe zu verbrennen.

Vorzugsweise beträgt der Energieeintrag, der durch den schwefelhaltigen Ausgangstoff mit gebundenem Stickstoff in den Verbrennungsapparat eingebracht wird, maximal 30% des gesamten, durch schwefelhaltige Ausgangsstoffe in den Verbrennungsapparat eingebrachten Energieeintrags.

Der Begriff stickstoffhaltige Verbindungen bezieht sich hier auf Verbindungen, in denen Stickstoff chemisch gebunden und nicht elementar als $N_2$ vorliegt. Beispiele für stickstoffhaltige Verbindungen sind $NH_3$ oder Amine. Bei ihrer Verbrennung besteht die Gefahr der Bildung von $NO_x$. Ein schwefelhaltiger Ausgangsstoff mit gebundenem Stickstoff ist ein Stoff oder Stoffgemisch, der/das neben mindestens einer schwefelhaltigen Verbindung mindestens eine stickstoffhaltige Verbindung mit chemisch gebundenem Stickstoff enthält. Ein Beispiel ist Sour Water Stripper Gas, das sich aus in etwa gleichen molaren Anteilen von $H_2S$, $NH_3$ und $H_2O$ zusammensetzt. Schwefelhaltige Ausgangsstoffe sind Stoffe oder Stoffgemische, die mindestens eine schwefelhaltige Verbindung enthalten, wobei diese schwefelhaltige Verbindung auch elementarer Schwefel oder Schwefeldioxid sein kann. Ein weiteres Beispiel einer schwefelhaltigen Verbindung ist $H_2S$. Ein Beispiel für einen schwefelhaltigen Ausgangsstoff ist Amin Acid Gas.

Vorzugsweise wird die gesamte Menge des Verbrennungsgases, die für die Umsetzung der schwefelhaltigen Ausgangsstoffe in Schritt I und für die Umsetzung von Schwefeldioxid in Schritt III (ggf. auch V) des erfindungsgemäßen Verfahrens benötigt wird, bereits in Stufe I eingesetzt, d.h. in den Verbrennungsapparat gefördert.

Vorzugsweise wird ein Teil der produzierten Schwefelsäure im Gegenstrom zu dem Prozessgas, das die genannten Stufen I bis IV (beziehungsweise gegebenenfalls bis V) durchläuft, geführt, um gemäß der Schritte IV (und gegebenenfalls V) $SO_3$ zu absorbieren und gemäß Schritt II das Prozessgas zu trocknen.

Dadurch bestimmen der Wasserstoffanteil und der Wassergehalt in den Ausgangsstoffen die Konzentration der herstellbaren Schwefelsäure.

Durch den schwefelhaltigen Ausgangsstoff werden, je nach seiner Zusammensetzung, größere oder kleinere Mengen an Wasser in das Verfahren eingebracht. So kann der schwefelhaltige Ausgangsstoff bereits eine gewisse Menge an Wasser enthalten, ebenso ist es aber auch denkbar, dass der schwefelhaltige Ausgangsstoff $H_2S$ und gegebenenfalls weitere Verbindungen mit gebundenem Wasserstoff wie beispielsweise Ammoniak oder Kohlenwasserstoffe enthält, die bei der Verbrennung im Verbrennungsapparat zur Bildung von Wasser führen. Je größer der Anteil an Wasser ist, der durch die Ausgangsstoffe in Form von Wasser oder gebundenem Wasserstoff in das Verfahren eingeführt wird, desto geringer ist die Konzentration der gewonnenen Schwefelsäure.

Schwefelsäure mit einer hohen Konzentration von mindestens 96 Gew.-% an $H_2SO_4$ wird bevorzugt.

In einer bevorzugten Ausführungsform des erfindungsgemäßen Verfahrens werden daher verschiedene schwefelhaltige Ausgangsstoffe nebeneinander verbrannt, um eine gewünschte Schwefelsäurekonzentration gezielt einzustellen. Dabei werden wasserstoffarme und wasserstoffreiche Ausgangsstoffe miteinander kombiniert.

Unter einem wasserstoffarmen Ausgangsstoff wird ein schwefelhaltiger Ausgangsstoff verstanden, der pro eingebrachtem Schwefelatom weniger Wasserstoffatome in das Verfahren einbringt als der wasserstoffreiche Ausgangsstoff.

Analog ist ein wasserstoffreicher Ausgangsstoff dementsprechend ein schwefelhaltiger Ausgangsstoff, der pro eingebrachtem Schwefelatom mehr Wasserstoffatome in das Verfahren einbringt als der wasserstoffarme Ausgangsstoff.

Die Menge an Wasser, die der wasserstoffreiche Ausgangsstoff zu viel in das Verfahren einbringt, um die gewünschte Schwefelsäurekonzentration zu erzielen, muss durch den wasserstoffarmen Ausgangsstoff gewissermaßen kompensiert werden.

Die zu verbrennenden Abgase weisen in der Regel bereits einen hohen Wasserstoffanteil auf, wie beispielsweise Sour Water Stripper Gas, das pro Schwefelatom insgesamt sieben Wasserstoffatome in das Verfahren einbringt, wenn das Sour Water Stripper Gas eine molare Zusammensetzung von exakt 1/3 $H_2S$, 1/3 $NH_3$ und 1/3 $H_2O$ aufweist. Die erfindungsgemäß zu verbrennenden Abgase sind daher in der Regel wasserstoffreiche Ausgangsstoffe, die zur gezielten Einstellung der Schwefelsäurekonzentration mit einem wasserstoffarmen Ausgangsstoff kombiniert werden müssen.

Vorzugsweise wird elementarer Schwefel als wasserstoffarmer Ausgangsstoff eingesetzt, da Schwefel, sofern er trocken ist, überhaupt keinen Wasserstoff in das Verfahren einbringt.

Schwefel fällt beispielsweise in Claus-Anlagen von Raffinerien in großen Mengen an. Die Einspeisung von elementarem Schwefel in das Verfahren erfolgt in erster Linie zur Regelung der gewünschten Schwefelsäurekonzentration. Es kann aber auch überschüssiger Schwefel beliebig mit in das erfindungsgemäße Verfahren gegeben werden. Eine "zu hohe" Schwefelsäurekonzentration kann in diesem Fall durch Zudosierung von Wasser in den Säuretank kompensiert werden. Der Vorteil der Zudosierung von elementarem Schwefel ist die damit verbundene gesteigerte Gewinnung von Hochdruckdampf und Schwefelsäure.

Die Ausgangsstoffe und ihre Dosierströme werden in einer bevorzugten Ausführungsform aufeinander abgestimmt, um eine gezielte Schwefelsäurekonzentration einzustellen.

In einer bevorzugten Ausführungsform werden die Ausgangsstoffe (wasserstoffarme und wasserstoffreiche) und ihre Dosierungsströme in den Verbrennungsapparat so aufeinander abgestimmt, dass eine Schwefelsäure mit einer Konzentration von mindestens 96 Gew.-% erzeugt wird.

Eine 96 Gew.-%ige Schwefelsäure weist pro Mol $H_2SO_4$ 0,227 Mol $H_2O$ auf. Zusätzlich steckt in dem $H_2SO_4$-Mo-

lekül noch ein weiteres Wassermolekül. Das bedeutet, dass beispielsweise zur Gewinnung einer 96 Gew.-%igen Schwefelsäure pro Mol $SO_3$ 1,227 Mol Wasser benötigt werden.

Die wasserstoffarmen und wasserstoffreichen Ausgangsstoffe können zusammen oder separat dem Verbrennungsapparat zugeführt werden.

Bei der bevorzugten Verwendung von elementarem Schwefel als wasserstoffarme Schwefelverbindung erfolgt die Zugabe vorzugsweise in die (in Strömungsrichtung) letzte Verbrennungszone.

Hier hat die Zugabe von Schwefel den weiteren Vorteil, dass er Stickoxide, die in vorangegangenen Verbrennungszonen entstanden sind, reduziert.

Insofern ist es auch unabhängig von der Einstellung der Schwefelsäurekonzentration vorteilhaft, Schwefel in die letzte Verbrennungszone zu düsen, um ungewünschte Stickoxide zu entfernen. Dies gilt insbesondere deshalb, weil mindestens ein schwefelhaltiger Ausgangsstoff des erfindungsgemäßen Verfahrens stets gebundenen Stickstoff enthält und das Verbrennungsgas ggf. Stickstoff enthalten kann. Zwar wird die Bildung von Stickoxiden aus gebundenem Stickstoff durch die oben diskutierte Verbrennung in einer lokalen Reduktionszone weitgehend unterdrückt, sie kann jedoch nicht vollständig unterbunden werden.

Insofern können die bei der Verbrennung entstehenden geringen Mengen an $NO_x$ wirksam durch Schwefelzugabe in die letzte Verbrennungszone reduziert werden.

Die selektive nicht-katalytische Reduktion von $NO_x$ durch Schwefel wurde in adiabaten Brennkammern bereits nachgewiesen und in einer nicht-adiabaten Brennkammer in dem sehr engen Temperaturfenster von 500°C bis 700°C eingesetzt (siehe z.B. EP1295849A2). Überraschend wurde jedoch festgestellt, dass die selektiv-reduzierende Wirkung des Schwefels über einen weiten Temperaturbereich effektiv ist, so dass sie für das erfindungsgemäße Verbrennungsverfahren in einem nicht-adiabaten Verbrennungsapparat eingesetzt werden kann. Dies geschieht vorzugsweise durch Zugabe von Schwefel in der letzten Verbrennungszone, in der Verbrennungstemperaturen im Bereich 400 °C bis 1200 °C, bevorzugt im Bereich 600°C bis 1000 °C, besonders bevorzugt oberhalb von 700°C und unterhalb von 1 000°C vorherrschen.

Das Verfahren eignet sich prinzipiell für alle denkbaren schwefelhaltigen Ausgangsstoffe/Abgase, wie beispielsweise saure Gase, die aus einer Aminwäsche resultieren und daher Restmengen an gebundenem Stickstoff in Form von Aminen aufweisen können (siehe z.B A. J. Kidnay, William R. Parrish: Fundamentals of Natural Gas Processing, CRC Press, 2006). Solche Gase weisen üblicherweise einen Anteil von 80-90 Mol-% $H_2S$ auf. Diese Gase werden hier als Amine Acid Gas (AAG) bezeichnet.

Ein weiterer möglicher, zumindest anteilig vorhandener Ausgangsstoff ist das aus einem Sour-Water-Stripper resultierende Gas (SWSG), das in etwa die molare Zusammensetzung $1/3 H_2S$, $1/3\ H_2O$ und $1/3\ NH_3$ aufweist. Dieses wird auch als Sour Water Stripper Off-Gas bezeichnet (siehe beispielsweise Arthur Kohl, Richard Nielsen: Gas Purification, Fifth Edition, Gulf Publishing Company, 1997).

In einer bevorzugten Ausführungsform werden ein schwefelhaltiger Ausgangsstoff mit gebundenem Stickstoff (vorzugsweise Sour Water Stripper Gas, SWSG), ein schwefelwasserstoffhaltiges Gas (vorzugsweise Amine Acid Gas, AAG) und elementarer Schwefel nebeneinander verbrannt. Der stickstoffhaltige Ausgangsstoff und das schwefelwasserstoffhaltige Gas oder ein Teil davon werden in die erste Verbrennungszone dosiert. Zur Verbrennung des stickstoffhaltigen Ausgangsstoffs wird ein Low-NOx-Brenner eingesetzt, um die Bildung von $NO_x$ aus dem gebundenen Stickstoff zu unterdrücken. In der Flamme des Low-NOx-Brenners herrschen reduzierende Bedingungen, während in der übrigen Verbrennungszone ein Sauerstoffüberschuss vorliegt. Der ersten Verbrennungszone können weitere Verbrennungszonen folgen, in denen schwefelwasserstoffhaltiges Gas verbrannt wird. In der letzten Verbrennungszone erfolgt eine Zugabe von elementarem Schwefel, um bei der Verbrennung entstandenes $NO_x$ (aus $N_2$ und/oder aus gebundenem Stickstoff) zu reduzieren. Durch diese gestufte Verbrennung erhält man ein Prozessgas mit einem hohen Anteil an $SO_2$ und geringen Anteilen an $NO_x$. Werden beispielsweise SWSG als stickstoffhaltiger Ausgangsstoff und AAG als schwefelwasserstoffhaltiges Gas verwendet, so sollte der durch SWSG in den Verbrennungsapparat eingebrachte Energieeintrag höchstens 30% des gesamten in den Verbrennungsapparat durch Schwefelverbindungen eingebrachten Energieeintrags ausmachen.

In einer weiteren bevorzugten Ausführungsform werden neben einer oder mehreren Schwefelverbindungen dem Verbrennungsapparat schwefeldioxidhaltige Ströme zugeführt, die thermisch behandelt werden müssen, um darin enthaltende störende Komponenten (z.B. Kohlenmonoxid oder organische Komponenten) zu oxidieren. Diese Ströme können beispielsweise Abgase des Regenerators bei Fluid Catalytic Crackern in der Erdöl verarbeitenden Industrie aus Kalzinizerprozessen oder aus Schwefelsäure-Spaltanlagen sein. Die schwefeldioxidhaltigen Gase weisen üblicherweise einen vergleichsweise geringen Sauerstoffgehalt auf und führen daher zu einer Verdünnung des Verbrennungsgases, was zur Temperaturführung im Verbrennungsapparat vorteilhaft sein kann. Die Abgase werden so einer sinnvollen Verwertung zugeführt.

Zur Verbrennung der Ausgangsstoffe wird ein sauerstoffhaltiges Verbrennungsgas verwendet. Der Volumengehalt an Sauerstoff im Verbrennungsgas beträgt mindestens 20%, bevorzugt mindestens 50%, besonders bevorzugt mindestens 70%, ganz besonders bevorzugt mindestens 90%, am meisten bevorzugt mindestens 95%.

Es ist denkbar, zur Eindüsung der Ausgangsstoffe in den Verbrennungsapparat und/oder zur Kühlung der Düsen Verbrennungsgas zu verwenden.

Werden beispielsweise $H_2S$ und $O_2$ in reiner Form miteinander umgesetzt, beträgt die adiabate Flammentemperatur etwa 3000°C. Ziel ist es, die Verbrennung so zu führen, dass die adiabate Flammentemperatur 2000°C nicht übersteigt.

Vorzugsweise wird zur Eindüsung der Ausgangsstoffe und/oder zur Kühlung der Düsen daher ein Gas verwendet, das über einen geringeren Anteil an Sauerstoff verfügt als das Verbrennungsgas. Als so genanntes Eindüsungs- und/oder Düsenkühlungsgas wird beispielsweise Luft oder vorzugsweise zumindest anteilig rückgeführtes Prozessgas enthaltend $SO_2$ verwendet. Auch der Einsatz von $SO_2$-haltige Gasströmen mit geringem Sauerstoffgehalt (z.B. Abgas von Kalzinieranlagen oder Regenerator des Fluid Catalytic Crackers) ist denkbar.

Durch den geringeren Sauerstoffgehalt des Eindüsungs- und/oder Düsenkühlungsgases wird die Sauerstoffkonzentration in unmittelbarer Nähe der Düsenspitzen reduziert und so die Flammenspitzentemperaturen von den Düsenspitzen separiert. Auf diese Weise werden Schädigungen der Düsen aufgrund zu hoher Temperaturen verhindert.

In einer bevorzugten Ausführungsform werden die in den Verbrennungsapparat eintretenden Komponenten (Verbrennungsgas und/oder schwefelhaltige Ausgangsstoffe) durch Zugabe von rückgeführtem Gas aus dem Prozess verdünnt. Das rückgeführte Prozessgas (Kreisgas) besteht dabei hauptsächlich aus nicht umgesetzten Mengen von $SO_2$ und/oder $O_2$ und wird aus dem Prozess nach einer $SO_3$-Absorption, d.h. in Anschluss an die Stufen IV und/oder V entnommen. In einer bevorzugten Ausführungsform wird ein Teil des Prozessgases nach Stufe IV in den Verbrennungsapparat zurückgeführt.

Die Verdünnung führt zu einer besser kontrollierbaren Wärmeentwicklung bei Eintritt der Reaktionskomponenten in den Verbrennungsapparat.

Durch die intensive Kühlung in dem Verbrennungsapparat wird das bei der Verbrennung entstehende Prozessgas von einer Temperatur bis 2000°C auf eine Temperatur von 300°C bis etwa 420°C gekühlt. Die Reaktionswärme kann beispielsweise zur Erzeugung von Hochdruck-Dampf bei z.B. 30 bar verwendet werden. Dadurch ergibt sich ein hoher energetischer Wirkungsgrad des Gesamtverfahrens.

Das Prozessgas, welches den Verbrennungsapparat mit einer Temperatur von 300°C bis etwa 420°C verlässt, besteht im Wesentlichen aus $SO_2$, $O_2$ und Wasser. Um die nachfolgende katalytische Oxidation von $SO_2$ zu $SO_3$ möglichst wasserfrei zu fahren, wird das Prozessgas getrocknet (Schritt II); dies geschieht vorzugsweise mittels Schwefelsäure, die in den $SO_3$-Absorptionsstufen erzeugt wird.

Die Entfernung des Wassers erfolgt wie dem Fachmann bekannt beispielsweise in einer FüllkörperKolonne, in der vorzugsweise konzentrierte Schwefelsäure und das zu trocknende $SO_2/H_2O$-Gemisch aus Schritt I im Gegenstrom geführt werden. Zur Vermeidung einer Schädigung der Füllkörperkolonne wird das zu trocknende $SO_2/H_2O$-Gemisch aus Schritt I zuvor abgekühlt. Dies erfolgt wie dem Fachmann bekannt beispielsweise in einer Quenche, in die der Flüssigkeitsablauf der Trocknungskolonne eingedüst wird und mittels Verdunstungskühlung den heißen Gasstrom aus Schritt I kühlt.

In einer bevorzugten Ausführungsform wird das Prozessgas vor der Trocknung in einer Quenche auf eine Temperatur im Bereich von vorzugsweise 60°C mit der Schwefelsäure gekühlt, die aus der Trocknungskolonne abläuft. In der Trocknungskolonne werden das gekühlte Gas und Schwefelsäure, die in der 1. Absorptionsstufe erzeugt wird, über eine Packung im Gegenstrom geführt.

In dieser Verfahrensstufe wird die Produkt- oder Verkaufskonzentration der Schwefelsäure eingestellt. Vorzugsweise besitzt die Säure nach der Quenche eine 96%ige oder 98%ige Konzentration, besonders bevorzugt eine 96%ige Konzentration.

Die Schwefelsäure aus der Trocknungsstufe nimmt bei der Trocknung beträchtliche Mengen $SO_2$ auf, die vorzugsweise entfernt werden. Die Entfernung wird z.B. unter Verwendung einer Blasensäule oder einer gepackten Kolonne mithilfe des für die Verbrennung in Schritt I eingesetzten Verbrennungsgases durchgeführt. Am Kopf der Säule oder Kolonne wird die Schwefelsäure und im Gegenstrom ein Teil des benötigten Verbrennungsgases aufgegeben. Angereichert mit $SO_2$ wird das Verbrennungsgas dann der Verbrennung zugeführt.

Das aus Schritt II resultierende getrocknete Gasgemisch enthält vorzugsweise Schwefeldioxid und Sauerstoff im Volumenverhältnis von 0,5 bis 1,5, bevorzugt von 0,8 bis 0,9. Dieses Gasgemisch kann dem weiter unten beschriebenen Kontaktverfahren in einem Röhrenkontaktapparat unmittelbar zugeführt werden, ohne dass es einer Verdünnung und/oder einer Zuführung von weiterem Sauerstoff und/oder Schwefeldioxid bedarf.

In Schritt III des erfindungsgemäßen Verfahrens wird das in Schritt I gewonnene Schwefeldioxid weiter zu Schwefeltrioxid umgesetzt. Die Umsetzung zu Schwefeltrioxid erfolgt mittels eines Kontaktverfahrens. Vorzugsweise wird mindestens ein Röhrenkontaktapparat, wie er beispielhaft in WO2008/052649A1 beschrieben ist, verwendet. Einem solchen Röhrenkontaktapparat können Kontaktgase mit einem Schwefeldioxidgehalt von bis zu 66 Vol.-% zugeführt werden, da der Röhrenkontaktapparat durch eine intensive Wärmeabfuhr gekennzeichnet ist.

Um die Reaktionsrohre des Röhrenkontaktapparats quasi-isotherm zu betreiben, erfolgt mittels eines Kühlmediums, das durch die Außenrohre geführt wird, eine kontinuierliche Wärmeabfuhr. Vorzugsweise erfolgt die Wärmeabfuhr über einen Zwischenkreislauf. Durch den Zwischenkreislauf wird die Wärme von den Reaktionsrohren abgeführt und in einem nachgeschalteten indirekten Wärmeübertrager an ein weiteres Medium zur energetischen Nutzung übertragen. Somit erfolgt beispielsweise eine energetische Nutzung zur Dampferzeugung nicht unmittelbar durch die an den Reaktionsrohren frei werdende Wärme, sondern erst durch die vom Zwischenkreislauf übertragene Wärme.

Die Führung des Kühlmediums kann im Gegen- oder Gleichstrom erfolgen. Aufgrund des exothermen Reaktionsverlaufs ist die vorzugsweise Ausgestaltung die Gleichstromführung. Sie bietet deutliche Vorteile in Bezug auf die sichere Vermeidung von lokalen Temperaturüberschreitungen am Katalysator und bezüglich des Massenstroms des im Kreislauf zu führenden Kühlmediums.

Als Kühlmedium für die indirekte Wärmeabfuhr über den Zwischenkreislauf können grundsätzlich in Betracht gezogen werden: Wärmeträgeröle, Salzschmelzen, Salzlösungen, Dampf, Gase und/oder Luft.

Die aus dem Kühlkreislaufbetrieb im Temperaturniveau von etwa 220°C bis 550°C bevorzugt von 300°C bis 450°C abzuführende Wärme kann über einen Wärmetauscher bevorzugt als Dampf zur weiteren betrieblichen Verwendung ausgekoppelt werden.

Üblicherweise besteht der Katalysator in den Reaktionsrohren aus einem katalytisch aktiven Metall oder einem Metallderivat, das, ggf. mit Promotoren versehen, auf einem inerten, temperaturbeständigen Katalysatorträgermaterial aufgetragen ist. Beispielsweise ist der Katalysator $V_2O_5$ mit Kalium- und Natriumsalzen auf $SiO_2$ geträgert. Alternativ kann auch handelsüblicher mit Cäsium dotierter Vanadiumpentoxidkatalysator eingesetzt werden.

Das sich im Schritt III des erfindungsgemäßen Verfahrens einstellende Temperaturfenster und insbesondere Temperaturmaximum wird innerhalb festgelegter Grenzen bezüglich der Schwefeldioxidkonzentration im Wesentlichen in der Designphase festgelegt. Wesentliche Parameter für das Design sind Gaseintrittstemperatur, Gasgeschwindigkeit, Katalysatorverdünnung, Rohrgeometrie und Kühlleistung.

Die Bedingungen werden üblicherweise so gewählt, dass der Katalysator beim Einsatz eines Vanadiumpentoxidkatalysators mit oder ohne Cäsium an keiner Stelle den schädlichen Grenzwert von 640°C überschreitet. Bevorzugt werden die Bedingungen so gewählt, dass sich über die Rohrlänge ein Temperaturprofil einstellt, bei dem die Eintrittstemperatur im Bereich von 380°C bis 450°C, vorzugsweise 400°C bis 450°C und die Austrittstemperatur im Bereich von 430°C bis 500°C liegt, sowie das Temperaturmaximum nicht höher als 580 °C liegt.

Zur Verbesserung des Temperaturprofils über die Schütthöhe des Katalysators kann der Katalysator mit einem temperaturbeständigen Inertmaterial insbesondere dem reinen Katalysatorträgermaterial vermischt werden, wie z. B. mit Glas, $SiO_2$, $Al_2O_3$ oder sonstigen üblichen Oxiden, Keramik, Silicagel oder Zeolithe, bevorzugt Glas und Keramik.

Üblicherweise wird der eingesetzte Katalysator in seiner Reaktivität durch Mischen mit dem Inertmaterial im Mengenverhältnis 1:100 bis 100:1 voreingestellt. Bevorzugt werden Inertmaterial und Katalysator in Mengenverhältnissen 90:10 bis 40:60, besonders bevorzugt 80:20 bis 40:60 vermischt.

Das Gas aus der Trocknungsstufe wird vor der ersten Kontaktstufe, die vorzugsweise durch einen Röhrenkontaktapparat gebildet wird, in einem Wärmetauscher mit dem Produktgas dieser Reaktion im Gegenstrom auf die notwendige Eintrittstemperatur (s. o.) vorgewärmt. Im Reaktor wird das $SO_2$ zu etwa 80 % mit dem überstöchiometrisch vorhandenen Sauerstoff zu $SO_3$ oxidiert. Die Wärme der stark exothermen Reaktion wird im Rohrbündelreaktor auf der Mantelseite durch einen Wärmeträger abgeführt, so dass das Produktgas den Reaktor mit einer Temperatur von ca. 480 °C verlässt. Der Wärmeträgerkreislauf erzeugt beispielsweise wiederum Hochdruck-Dampf.

Das aus der katalytischen Umsetzung resultierende Gasgemisch wird in Schritt IV des erfindungsgemäßen Verfahrens einem Absorber zugeführt, um $SO_3$ zu entfernen. Die Absorption geschieht, wie bereits beschrieben, unter Verwendung von Schwefelsäure, die im Prozess gewonnen und im Gegenstrom zum Prozessgas geführt wird.

In dieser ersten Absorptionsstufe kann die $SO_3$-Konzentration so hoch sein, dass eine konventionelle Absorptionskolonne die frei werdende Absorptionswärme nicht abführen kann. In einem solchen Fall wird bei der ersten Absorption eine Fallfilmkolonne verwendet. Dabei handelt es sich um ein vertikales Rohrbündel, welches von oben mit Schwefelsäure und von unten mit dem Gas beaufschlagt wird. Die Schwefelsäure läuft in den Rohren als dünner Film ab und reagiert mit dem $SO_3$ aus dem Gasstrom zu Schwefelsäure. Die frei werdende Wärme wird mantelseitig mit Kühlwasser abgeführt.

Das aus dem ersten Röhrenkontaktapparat resultierende Gasgemisch weist üblicherweise ein Massenverhältnis von $SO_2$:$SO_3$ im Bereich von 1:50 bis 1:2, bevorzugt im Bereich von 1:7 bis 1:3 und ganz bevorzugt 1:6 bis 1:4 auf. Das heißt, das aus der ersten Kontaktstufe resultierende Gas weist eine merkliche Restmenge an nicht umgesetztem Schwefeldioxid auf. Das Gasgemisch weist ferner Restmengen an Sauerstoff und gegebenenfalls weitere Bestandteile auf.

In einer bevorzugten Ausführungsform des erfindungsgemäßen Verfahrens sind dem Röhrenkontaktapparat ein oder mehrere Zwischenabsorber und eine oder mehrere weitere Kontaktstufen nachgeschaltet, um $SO_3$ aus dem Reaktionsgas zu entfernen und die Restmengen von $SO_2$ im Prozessgas zu reduzieren.

Die $SO_3$-Konzentrationen nach weiteren Kontaktstufen sind üblicherweise niedrig genug, um in einer gepackten Kolonne absorbiert zu werden.

Die weiteren Kontaktstufen können Röhrenkontaktapparate sein. Es ist aber auch denkbar, dass es sich bei diesen Kontaktstufen um konventionelle Horden handelt, wie sie zur katalytischen Oxidation von SO$_2$ zu SO$_3$ üblicherweise verwendet werden.

Ein Röhrenkontaktapparat eignet sich aufgrund der intensiven Wärmeabfuhr insbesondere bei hohen Schwefeldioxideingangskonzentrationen (siehe WO2008/052649A1). Nach Durchlaufen von zwei Röhrenkontaktapparaten ist die Konzentration an SO$_2$ im Gasstrom auch bei hohen SO$_2$-Anfangskonzentrationen in der Regel so weit reduziert, dass eine weitere Reaktion zu SO$_3$ in konventionellen Horden durchgeführt werden kann. Bei den hier noch geringen SO$_2$-Konzentrationen kann der erzielbare Umsatz durch eine entsprechende Katalysatorschicht eingestellt werden.

Zwischen den einzelnen Kontaktstufen erfolgt jeweils eine Absorption von SO$_3$ mit Schwefelsäure aus dem Prozess.

Die letzte Absorptionsstufe kann aufgrund der relativ geringen SO$_3$-Konzentration als gepackte Kolonne ausgeführt werden. Hier wird der Gasstrom mit Schwefelsäure aus dem Produkttank im Gegenstrom gefahren.

Die Schwefelsäure wird nach den Absorptionsstufen der konventionellen Horden und bevor sie in den Fallfilmabsorber gelangt, zurück auf 40°C gekühlt, da in diesem Apparat der Großteil der bei der Reaktion von SO$_3$ und H$_2$O zu H$_2$SO$_4$ frei werdenden Wärme im Verfahren frei wird.

Da der größte Anteil an Reaktionen im ersten Röhrenkontaktapparat und dem nachgeschalteten Fallfilmabsorber stattfindet, sich im Gasstrom nach dem Fallfilmabsorber noch ein hoher Anteil an Sauerstoff und nicht umgesetzten Schwefeldioxid befindet, wird ein Teil dieses Gasstromes zurück zum Verbrennungsapparat geführt.

Diese Rückführung ist zum einen wichtig, um die Temperaturführung im Verbrennungsapparat zu steuern, zum anderen wirtschaftlich interessant aufgrund des hohen Sauerstoffgehaltes in diesem Gasstrom, der in der Verbrennungsstufe genutzt werden kann und so die Betriebskosten minimiert. Besonders bevorzugt ist dabei eine Rückführung von 80 Gew.-% zum Verbrennungsapparat. Der restliche Gasstrom wird zu den weiteren Reaktionsstufen geführt um die Abgasauflagen zu erfüllen.

Vorzugsweise erfolgt eine Wärmerückgewinnung an unterschiedlichen Positionen des Prozesses für das Erzeugen von Dampf, Warmwasser und/oder elektrischer Energie. Das erfindungsgemäße Verfahren eignet sich daher besonders zur Umsetzung von schwefelhaltigen Abgasen aus einer Raffinerie, da die Raffinerie durch einen hohen Energiebedarf gekennzeichnet ist. Die Rückführung von Energie aus der erfindungsgemäßen Schwefelsäureherstellung in das Raffinationsverfahren und/oder Entschwefelungsverfahren führt daher zu einer günstigen Energiegesamtbilanz. Es ist denkbar, das Verbrennungsgas als Treibstrom für das Kreisgas z.B. in einer Strahlpumpe zu nutzen und den gesamten Prozess zur Reduktion der Apparatevolumina und zur Verbesserung des gasseitigen Stofftransports bei der Absorption unter höherem Druck (üblicherweise 2 - 6 bar) zu fahren.

Die Erfindung wird nachstehend beispielhaft näher erläutert, ohne sie jedoch auf die beschriebenen Merkmale zu beschränken.

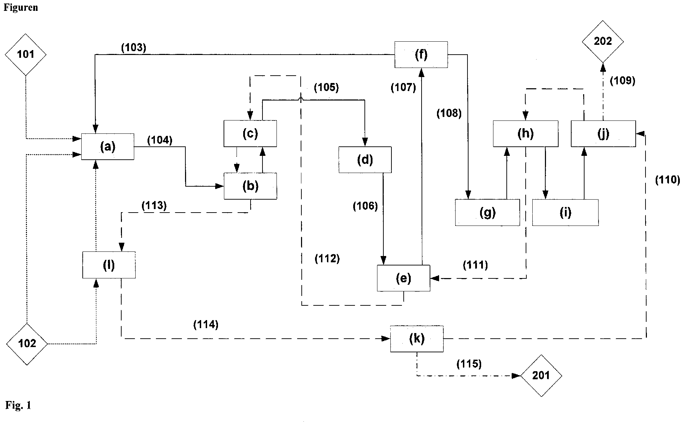

**Figur 1** zeigt schematisch eine bevorzugte Ausführungsform der erfindungsgemäßen Vorrichtung als Blockschaltbild (siehe Beispiel).

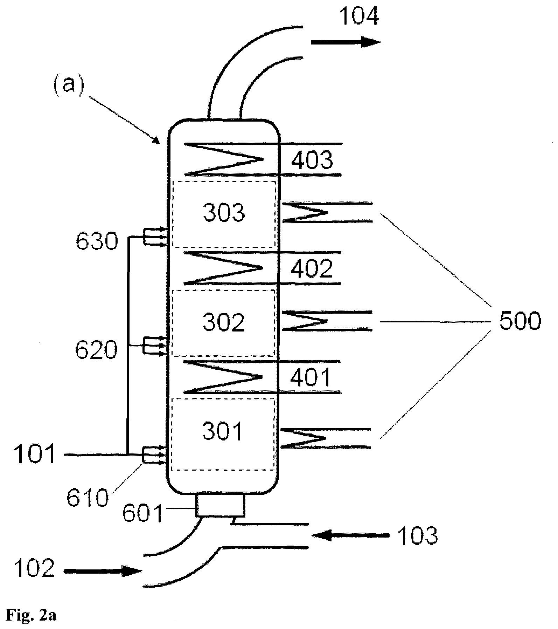

**Figur 2a** zeigt schematisch eine bevorzugte Ausführungsform des erfindungsgemäßen Verbrennungsapparats (a). Über einen unteren Einlass (601) wird das O$_2$-haltige Verbrennungsgas (102) in den Verbrennungsapparat gefördert. Diesem Hauptgasstrom können nicht umgesetzte Bestandteile aus dem erfindungsgemäßen Verfahren oder aus dem erfindungsgemäßen Verfahren nachgeschalteten Prozessen beigegeben werden (Kreisgas 103). Die Zuführung der Schwefelverbindung (101) erfolgt entlang der Strömungsrichtung in drei aufeinanderfolgenden Verbrennungszonen (301, 302, 303, dargestellt durch gestrichelte Linien). Die Zuführung der Schwefelverbindung (101) erfolgt dabei jeweils seitlich (610, 620, 630). Wie oben beschrieben kann zur Eindüsung flüssiger Schwefelverbindungen beispielsweise Kreisgas verwendet werden (in der Figur nicht explizit dargestellt). Die Verbrennungszonen sind nicht-adiabat ausgeführt, was im vorliegenden Fall u.a. durch eine Wandkühlung (500) realisiert wird. Zwischen den Verbrennungszonen sind ferner Wärmetauscher zur Kühlung angeordnet (401, 402). Im Anschluss an die letzte Verbrennungszone (303) erfolgt eine weitere Kühlung (403), bevor das Reaktionsgas (104) den erfindungsgemäßen Verbrennungsapparat verlässt.

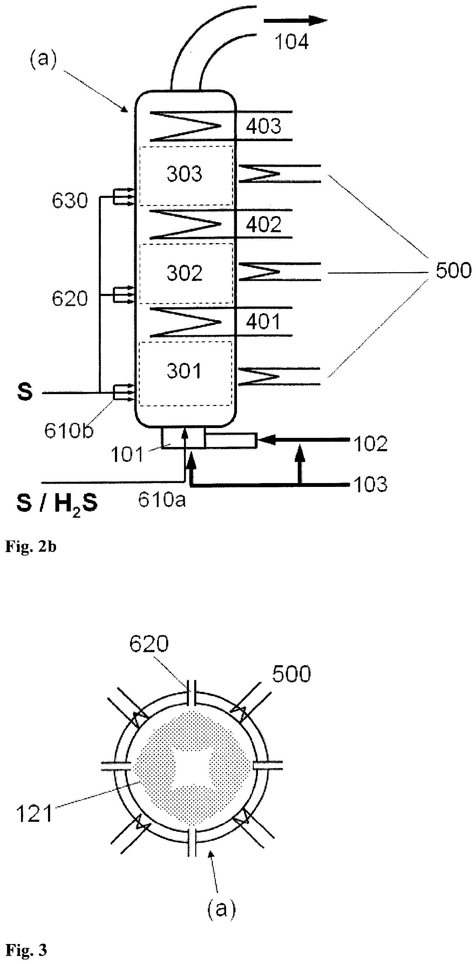

**Figur 2b** zeigt schematisch eine weitere bevorzugte Ausführungsform des erfindungsgemäßen Verbrennungsapparats (a). Über einen unteren Einlass (601) wird das O$_2$-haltige Verbrennungsgas (102) in den Verbrennungsapparat gefördert. Diesem Hauptgasstrom können nicht umgesetzte Bestandteile aus dem erfindungsgemäßen Verfahren beigegeben oder separat über den unteren Einlass (601) zugeführt werden (Kreisgas 103). Die Zuführung eines Teils der Schwefelverbindungen (S / H$_2$S, 610a) erfolgt dabei in der ersten Verbrennungszone (301) zentral in der Zuführung des Verbrennungsgases (601) oder seitlich (S, 610b) und in den weiteren Verbrennungszonen jeweils seitlich (S, 620, 630). Wie oben beschrieben können mehrere unterschiedliche Schwefelverbindungen (z.B. Schwefelverbindungen mit gebundenem Stickstoff, Schwefelverbindung ohne gebundenen Stickstoff, flüssiger Schwefel) zugeführt werden (in der Figur nicht explizit dargestellt) und zur Eindüsung von flüssigem Schwefelverbindungen und zur Düsenkühlung z.B. Kreisgas verwendet werden (in der Figur nicht explizit dargestellt). Die Verbrennungszonen sind nicht-adiabat ausgeführt, was im vorliegenden Fall u.a. durch eine Wandkühlung (500) realisiert wird. Zwischen den Verbrennungszonen sind ferner Wärmetauscher zur Kühlung angeordnet (401, 402). Im Anschluss an die letzte Verbrennungszone (303) erfolgt eine weitere Kühlung (403), bevor das Reaktionsgas (109) den erfindungsgemäßen Verbrennungsapparat verlässt.

**Figur 3** zeigt einen Querschnitt durch den in Figur 2a und Figur 2b gezeigten Verbrennungsapparat (a) in Höhe der seitlichen Eindüsungsstellen (620) für die Schwefelverbindung (101). Es sind vier Düsen vorhanden, die zu einer fächerförmigen Eindüsung (121) der Schwefelverbindung führen. Die Wandkühlung 500 ist ebenfalls schematisch dargestellt.

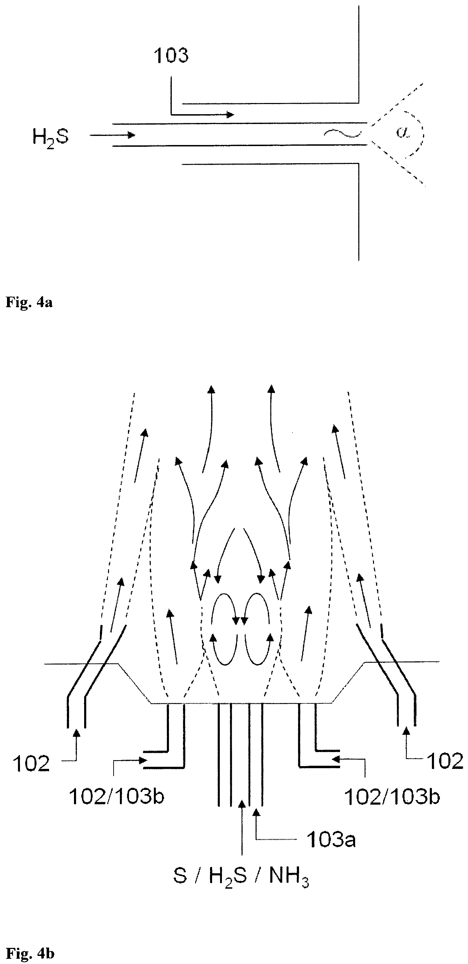

**Figur 4a** zeigt schematisch eine bevorzugte Ausführungsform einer Düse zur Dosierung von schwefelhaltigen Gasen in die Brennkammer. In das Einleitrohr ist ein Drallkörper eingebracht, der zu einer Aufweitung des Gasein-trittskegels $\alpha$ führt.

**Figur 4b** zeigt schematisch eine bevorzugte Ausführungsform für den Einlass (601) für das Verbrennungsgas (102), durch den auch zentral schwefelhaltige Ausgangsstoffe mit gebundenem Stickstoff zugegeben werden. Diese Ausführungsform ist analog zu einem Low-NOx-Brenner ausgeführt, insofern die Zugabe des sauerstoffhaltigen Verbrennungsgases (102) und Kreisgases (103) am Brenner direkt gestuft erfolgt.

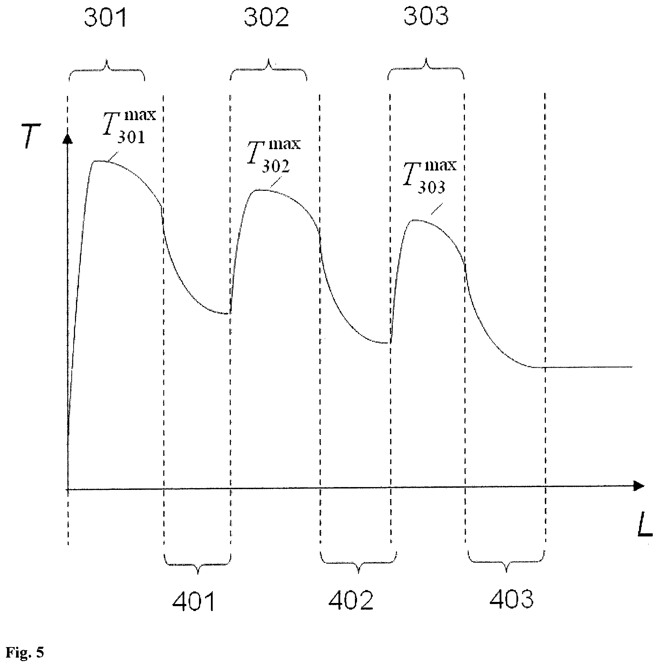

**Figur 5** zeigt das Temperaturprofil in einem bevorzugt verwendeten Verbrennungsapparat in Strömungsrichtung entlang einer Linie *L,* die parallel zu einem Längsschnitt durch den Verbrennungsapparat führt. Zunächst steigt die Temperatur $T$ in der ersten Verbrennungszone 301 bis auf einen Maximalwert $T_{301}^{max}$ an. Dieser Maximalwert wird durch Kühlung auf einen Wert von $\leq 2000°C$ gehalten. Der Verbrennungszone 301 ist eine intensive Zwischenkühlung 401 nachgeschaltet, die zu einer Temperatursenkung führt. Die Temperatur steigt dann in der zweiten Verbrennungszone 302 auf einen Maximalwert $T_{302}^{max}$ an, der kleiner ist als $T_{301}^{max}$. Auch der Verbrennungszone 302 ist eine intensive Kühlung (402) nachgeschaltet; die Temperatur sinkt. In der dritten Verbrennungszone 303 erreicht das Prozessgas schließlich eine Maximaltemperatur $T_{303}^{max}$, die kleiner ist als $T_{302}^{max}$. Bevor das Prozessgas den Verbrennungsapparat verlässt, wird es erneut gekühlt (403).

Es sei angemerkt, dass das Temperaturprofil über den Querschnitt des Verbrennungsapparats variiert; so liegen die Temperaturen in der Nähe der Wandungen des Verbrennungsapparates aufgrund der Wandkühlung deutlich niedriger als in den wandfernen Bereichen.

**Beispiel:**

Im Folgenden wird als ein Ausführungsbeispiel das Ergebnis einer numerischen Berechnung zur Herstellung von rund 16 t/h Gew.-96-%iger Schwefelsäure beschrieben. Das Verfahren wird in einer Anlage gemäß Fig. 1 durchgeführt.

Als Ausgangsstoffe werden 6,1 t/h Amin-Acid-Gas mit einer Zusammensetzung von 85 Mol-% $H_2S$, 7 Mol-% $H_2O$, 5 Mol-% $CO_2$ und 3 Mol-% $CH_4$, 0,8 t/h Sour-Water-Stripping-Gas mit einer Zusammensetzung von 33 Mol-% $H_2S$, 33 Mol-% $H_2O$, 33 Mol-% $NH_3$ und 1 Mol-% $CH_4$, 0,2 t/h flüssiger, elementarer Schwefel ($S_2$) (101) und 12,2 t/h Verbrennungsgas (102) mit einem Massenanteil von 99,5% Sauerstoff und 0,5% Stickstoff einem Verbrennungsapparat (a) mit drei Verbrennungszonen zugeführt.

Zusätzlich werden der Brennkammer 8,2 t/h zurückgeführtes Gas (103) zugegeben, welches aus der ersten Absorptionsstufe kommt und eine Zusammensetzung aus 36,6 Mol-% $O_2$, 35,0 Mol-% $CO_2$, 15,7 Mol-% $N_2$, 12,7 Mol-% $SO_2$, sowie Spuren von sonstigen Bestandteilen aufweist.

Im Verbrennungsapparat findet eine vollständige Oxidation der Eduktgase statt, so dass am Ausgang der Brennkammer 30,1 t/h $SO_2$-haltigen Gasgemisches (104) erhalten werden, welches zu 29,3 Mol% $SO_2$, 31,8 Mol-% $H_2O$ 22,6 Mol-% $O_2$, 11,2 Mol-% $CO_2$ 5,1 Mol-% $N_2$ und Spuren von sonstigen Bestandteilen besteht. Die Verbrennung wird dabei so gefahren, dass keine Stickoxide entstehen, sondern der gebundene Stickstoff aus dem Ammoniak zu $N_2$ reagiert.

Das $SO_2$-haltige Gasgemisch wird im Verbrennungsapparat aufgrund der stark exothermen Reaktionen sowohl über die Apparatewand als auch zwischen den Verbrennungsstufen gekühlt. Die abgeführte Wärme wird zur Erzeugung von Heißdampf und überhitztem Dampf zur Stromgewinnung über eine Turbine verwendet. Dabei wird eine Wärmemenge von ca. 25 WM frei, welche zu einer Erzeugung von ca. 30 t/h Hochdruckdampf (30 bar) verwendet wird.

Das SO$_2$-haltig Rauchgas verlässt den Verbrennungsapparat mit einer Temperatur von 300 bis 350°C und wird nun einer Trocknungsstufe im Gegenstrom mit hochkonzentrierter Schwefelsäure (112) aus der Absorbtionsstufe (e) getrocknet. Da es bei Temperaturen unter 300°C zu einer Kondensation von Wasser und Bildung von schwefeliger Säure kommen kann, wird der Gasstrom zunächst in einer Säurequenche (b) auf ca. 60 °C abgekühlt, bevor er in die Trocknungskolonne (c) geleitet wird.
Die Absorption mit Schwefelsäure entfernt das Wasser aus dem Rauchgasstrom bis auf wenige ppm vor dem Eintritt in den Röhrenkontaktapparat (105).

Die Schwefelsäure (113) verlässt die Quenche mit einer Zusammensetzung von ca. 96 Gew.-% H$_2$SO$_4$ und hat aufgrund des hohen Anteils an SO$_2$ im zu trocknenden Gasstrom einen merklichen Anteil an gelöstem SO$_2$, welcher in einer Stripperkolonne (1) mit einem Teil des Verbrennungsgases herausgelöst wird. Die Schwefelsäure (114) wird anschließend in einen Säuretank (k) gepumpt, aus dem der Produktstrom (115) von ca. 16 t/h 96%iger Schwefelsäure kontinuierlich in das Produktsäuretanklager (201) abgezogen wird.

Der Prozessgasstrom (105) für den Röhrenkontaktapparat (d) wird in einem rekuperativen Wärmetauscher mit Hilfe des Produktstromes aus dem Reaktor auf die Eingangsreaktionstemperatur von 400 °C aufgeheizt.

Im Röhrenkontaktapparat wird das im Gasstrom enthaltene SO$_2$ zu 80% umgesetzt, so dass am Ausgang des Röhrenkontaktapparates ein Gasgemisch (106) bestehend aus 38,8 Mol-% SO$_3$, 21,6 Mol% O$_2$, 20,6 Mol-% CO$_2$ 9,7 Mol-% SO$_2$ und sonstigen Bestandteilen mit einer Temperatur von 480°C vorliegt.

Nach Durchströmen des rekuperativen Wärmetauschers zum Vorheizen des Eduktstroms für den Röhrenkontaktapparat wird das Gasgemisch mit einer Temperatur von 148°C einer Rieselfimkolonne (e) zugeführt. In dieser Kolonne wird der Anteil an SO$_3$ im Gasstrom bis auf Spuren von der im Gegenstrom geführten Schwefelsäure (111) absorbiert. Die Säure aus dem Sumpf der Fallfilmkolonne wird über einen Rohrbündelwärmetauscher auf 40 °C abgekühlt und anschließend in die Trocknungsstufe gepumpt.

Die nicht absorbierten Bestandteile der Gasphase mit einem Massenstrom von 10,2 t/h und einer Zusammensetzung von 36,6 Mol-% O$_2$, 35,0 Mol-% CO$_2$, 12,7 Mol-% SO$_2$, 15,7 Mol% N$_2$, sowie minimalen Spuren von sonstigen Bestandteilen werden in einem Abgassplitter (f) in zwei Ströme aufgeteilt. Vor dem Abgassplitter ist ein Ventilator in das System integriert um die Druckverluste im Verfahren auszugleichen. Der größere Anteil des Prozessgases von 80 Gew.-% wird zurück in den Verbrennungsapparat geführt (103). Der kleinere Anteil (108) besitzt eine deutlich zu hohe SO$_2$-Konzentratio um die gesetzlichen Anforderungen (siehe beispielsweise die Technische Anleitung zur Reinhaltung der Luft, erste allgemeine Verwaltungsvorschrift zum Bundes-Immissionsschutzgesetz der deutschen Bundesregierung) zu erfüllen. Daher wird er einer Restgasbehandlung zugeführt, welche aus zwei konventionellen Horden zur Schwefeldioxidoxidation mit jeweiliger Absorbtionsstufe besteht.

Der Abgasstom (108) mit einem Massenstrom von 2 t/h wird über einen rekuperativen Wärmetauscher durch den Produktgasstrom aus der ersten Horde auf die Reaktionstemperatur von 400 °C gebracht und in die erste Hordenreaktionsstufe (g) gefahren. Hier wird das restliche im Gasstrom enthaltene SO$_2$ bis zum chemischen Gleichgewicht zu SO$_3$ oxidiert. Nach dem rekuperativen Wärmetausch wird der Gasstrom in eine Zwischenabsorption (h) gefahren, in der das gebildete SO$_3$ nahezu vollständig absorbiert wird. Der gleiche Verfahrensschritt wird in der zweiten Hordenstufe (i) und der anschließenden Endabsorption (j) durchgeführt.

Nach Durchströmen des Wärmetauschers zum Vorheizen des Feeds für die Restgas-Reaktionsstufe, wird das Gasgemisch mit einer Temperatur von 132°C der Endabsorption (j) zugeführt. Diese geschieht in einer Packungskolonne, wobei der Anteil an SO$_3$ im Gasstrom bis auf minimale Spuren von der im Gegenstrom geführten Schwefelsäure (110) aus dem Säuretank (k) absorbiert wird. Die Säure aus dem Sumpf der Kolonne wird in die Zwischenabsorptionskolonne geführt. Von dort wird die Säure (111) in einen Rohrbündelwärmetauscher gepumpt, auf 40 °C abgekühlt und schließlich am Kopf in die Fallfilmkolonne der ersten Absorbtionsstufe (e) gegeben. Der Abgasstrom (109) aus dem Endabsorber (j) hat eine SO$_2$-Konzentration von 50 Vol.-ppm und wird über einen Schornstein aus dem System abgeführt.

Bezugszeichen:

101   schwefelhaltige Ausgangsstoffe (AAG, SWSG, SO$_2$, S$_2$ (1))
102   Verbrennungsgas
103   zurückgeführtes Gas aus dem Prozess (Kreisgas)
104   Prozessgas aus Verbrennungsapparat
105   Prozessgas nach Quenche und Trocknung vor Eintritt in die erste Kontaktstufe
106   Prozessgas vor Eintritt in die Fallfilmkolonne
107   Prozessgas zum Gassplitter
108   Prozessgas zur zweiten und dritten Kontaktstufe
109   Abgasstrom aus Endabsorber

110 Schwefelsäure im Gegenstrom geführt
111 Schwefelsäure nach Endabsorber und Zwischenabsorber
112 Schwefelsäure nach Fallfilmkolonne
113 Schwefelsäure nach Trocknungsstufe
114 Schwefelsäure nach Stripperkolonne (Produktqualität)
115 Produktaustrag Schwefelsäure aus Schwefelsäuretank
120 Zugabestellen für schwefelhaltige Ausgangsstoffe
121 eingedüste schwefelhaltige Ausgangsstoffe
201 Produktsäuretanklager
202 Schornstein
301 Verbrennungszone
302 Verbrennungszone
303 Verbrennungszone
401 Wärmeübertrager
402 Wärmeübertrager
403 Wärmeübertrager (Überhitzer)
500 Wandkühlung
601 Einlass für Verbrennungsgas
610 Eindüsungsstellen für Schwefelverbindung
620 Eindüsungsstellen für Schwefelverbindung

(a) Verbrennungsapparat
(b) Quenche
(c) Trocknung
(d) erste Kontaktstufe, Röhrenkontaktapparat
(e) Fallfilmkolonne
(f) Gassplitter
(g) zweite Kontaktstufe
(h) Zwischenabsorber
(i) dritte Kontaktstufe
(j) Endabsorber
(k) Säuretank
(1) Stripperkolonne

**Patentansprüche**

1. Kontinuierliches Verfahren zur Herstellung von Schwefelsäure, umfassend die Schritte

I. Verbrennen von schwefelhaltigen Ausgangsstoffen, die mindestens eine schwefelhaltige Verbindung oder elementaren Schwefel oder Schwefeldioxid sowie stickstoffhaltige Verbindungen enthalten, in einem Verbrennungsapparat unter Bildung eines $SO_2$- und $H_2O$-haltigen Prozessgases,
II. Trocknen des Prozessgases,
III. katalytisches Oxidieren von $SO_2$ zur $SO_3$ in einer ersten Kontaktstufe,
IV. Absorbieren von $SO_3$,
V. gegebenenfalls Durchlaufen weiterer Kontaktstufe zur weiteren katalytischen Oxidation von $SO_2$ zu $SO_3$ mit gegebenenfalls anschließender Absorption von $SO_3$,

**dadurch gekennzeichnet, dass** in Schritt I ein Hauptgasstrom umfassend ein sauerstoffhaltiges Verbrennungsgas durch den Verbrennungsapparat geführt wird und die schwefelhaltigen Ausgangsstoffe entlang des Hauptgasstromes in mehreren Verbrennungszonen dem Hauptgasstrom zugeführt werden, wo sie zünden, wobei das Prozessgas zwischen den Verbrennungszonen gekühlt wird, und wobei diejenigen schwefelhaltigen Ausgangsstoffe, die stickstoffhaltige Verbindungen enthalten, in der ersten Verbrennungszone in einer Flamme verbrannt werden, in der reduzierende Bedingungen herrschen, so dass die Bildung von Stickoxiden unterdrückt wird.

2. Verfahren nach einem der vorangegangenen Ansprüche, **dadurch gekennzeichnet, dass** die gesamte Menge des Verbrennungsgases, die für die Umsetzung der schwefelhaltigen Ausgangsstoffe in Schritt I und für die Umsetzung von Schwefeldioxid in Schritt III und ggf. Schritt V benötigt wird, bereits in Stufe I eingesetzt, d.h. in den Verbrennungsapparat gefördert wird.

**3.** Verfahren nach einem der vorangegangenen Ansprüche, **dadurch gekennzeichnet, dass** ein Teil der produzierten Schwefelsäure im Gegenstrom zu dem Prozessgas, das die genannten Stufen I bis IV beziehungsweise ggf. bis V durchläuft, geführt wird, um gemäß der Schritte IV und gegebenenfalls V $SO_3$ zu absorbieren und gemäß Schritt II das Prozessgas zu trocknen.

**4.** Verfahren nach einem der vorangegangenen Ansprüche, **dadurch gekennzeichnet, dass** ein wasserstoffarmer Ausgangsstoff und ein wasserstoffreicher Ausgangsstoff nebeneinander verbrannt werden, wobei die Ausgangsstoffe und ihre Dosierströme aufeinander abgestimmt werden, um eine gezielte Schwefelsäurekonzentration einzustellen.

**5.** Verfahren nach einem der vorangegangenen Ansprüche, **dadurch gekennzeichnet, dass** ein wasserstoffreicher Ausgangsstoff und ein wasserstoffarmer Ausgangsstoff gleichzeitig in den Verbrennungsapparat dosiert und dort verbrannt werden, wobei die Dosierströme des wasserstoffarmen und des wasserstoffreichen Ausgangsstoffs so aufeinander abgestimmt sind, dass pro Mol des im Verfahren entstehenden Schwefeltrioxids 1,227 Mol Wasser oder weniger in das Verfahren eingebracht werden oder im Verfahren entstehen.

**6.** Verfahren nach einem der Ansprüche 4 oder 5, **dadurch gekennzeichnet, dass** der wasserstoffarme Ausgangsstoff elementarer Schwefel ist.

**7.** Verfahren nach einem der vorangegangenen Anspruch, **dadurch gekennzeichnet, dass** in die in Strömungsrichtung vorliegende letzte Verbrennungszone elementarer Schwefel dosiert wird, um $NO_x$ zu reduzieren und/oder eine gezielte Schwefelsäurekonzentration einzustellen,

**8.** Verfahren nach einem der vorangegangenen Anspruche, **dadurch gekennzeichnet, dass** ein Sour Water Stripper Gas, ein Amin Acid Gas und elementarer Schwefel nebeneinander verbrannt werden, wobei das Sour Water Stripper Gas in die erste Verbrennungszone und der elementare Schwefel in die letzte Verbrennungszone dosiert wird.

**9.** Verfahren nach einem der vorangegangenen Ansprüche, **dadurch gekennzeichnet, dass** schwefeldioxidhaltige Ströme, die brennbare Anteile wie beispielsweise Kohlenmonoxid und/oder organische Komponenten enthalten, in den Verbrennungsapparat dosiert werden.

**10.** Verfahren nach einem der vorangegangenen Ansprüche, **dadurch gekennzeichnet, dass** die katalytische Oxidation in Schritt III, in einem Röhrenkontaktapparat durchgeführt wird.

**11.** Verfahren nach einem der vorangegangenen Ansprüche, **dadurch gekennzeichnet, dass** ein Teil des Prozessgases nach Stufe IV oder V in die Verbrennungsstufe I zurückgeführt wird.

**Claims**

**1.** A continuous process for producing sulfuric acid, comprising the following steps:

   I. combusting sulfur-containing starting materials that contain at least one sulfur-containing compound or elemental sulfur or sulfur dioxide in addition to nitrogen-containing compounds in a combustion unit to form a process gas containing $SO_2$ and $H_2O$,
   II. drying the process gas,
   III. catalytically oxidizing $SO_2$ to $SO_3$ in a first contact stage,
   IV. absorbing $SO_3$,
   V. optionally passing through additional contact stages for further catalytic oxidation of $SO_2$ to $SO_3$, optionally followed by absorption of $SO_3$,

   **characterized in that** in step I, a main gas stream containing an oxygen-containing combustion gas is led through the combustion unit, and the sulfur-containing starting materials are supplied to the main gas stream in multiple combustion zones along the main gas stream, where they ignite, the process gas being cooled between the combustion zones, and those sulfur-containing starting materials containing the nitrogen-containing compounds being combusted in the first combustion zone in a flame in which reducing conditions prevail, so that the formation of nitrogen oxides is suppressed.

2. The process according to one of the preceding claims, **characterized in that** the entire quantity of the combustion gas required for converting the sulfur-containing starting materials in step I and for converting sulfur dioxide in step III and optionally step V is already introduced, i.e., conveyed into the combustion unit, in step I.

3. The process according to one of the preceding claims, **characterized in that** a portion of the sulfuric acid produced is led in counterflow to the process gas passing through in aforementioned steps I to IV or optionally to V, in order to absorb $SO_3$ according to steps IV and optionally V, and to dry the process gas according to step II.

4. The process according to one of the preceding claims, **characterized in that** a hydrogen-lean starting material and a hydrogen-rich starting material are combusted in parallel, the starting materials and their metered flows being coordinated with one another in order to set a targeted sulfuric acid concentration.

5. The process according to one of the preceding claims, **characterized in that** a hydrogen-rich starting material and a hydrogen-lean starting material are simultaneously metered into the combustion unit and combusted there, the metered flows of the hydrogen-lean starting material and of the hydrogen-rich starting material being coordinated with one another in such a way that 1.227 moles or less of water are introduced into the process or are generated in the process per mole of the sulfur trioxide generated in the process.

6. The process according to one of Claims 4 or 5, **characterized in that** the hydrogen-lean starting material is elemental sulfur.

7. The process according to one of the preceding claims, **characterized in that** elemental sulfur is metered into the last combustion zone that is present in the flow direction in order to reduce $NO_x$ and/or to set a targeted sulfuric acid concentration.

8. The process according to one of the preceding claims, **characterized in that** a sour water stripper gas, an amine acid gas, and elemental sulfur are combusted in parallel, the sour water stripper gas being metered into the first combustion zone and the elemental sulfur being metered into the last combustion zone.

9. The process according to one of the preceding claims, **characterized in that** sulfur dioxide-containing streams that contain combustible fractions, for example carbon monoxide and/or organic components, are metered into the combustion unit.

10. The process according to one of the preceding claims, **characterized in that** the catalytic oxidation in step III is carried out in a tube contact apparatus.

11. The process according to one of the preceding claims, **characterized in that** a portion of the process gas is returned to combustion step I after step IV or V.


**Revendications**

1. Procédé de production continue d'acide sulfurique, comprenant les étapes consistant à

   I. brûler des matières premières soufrées, contenant au moins un composé soufré ou du soufre élémentaire ou du dioxyde de soufre et des composés azotés, dans un dispositif de combustion pour former un gaz de traitement contenant du $SO_2$ et du $H_2O$
   II. sécher le gaz de traitement,
   III. effectuer une oxydation catalytique du $SO_2$ en $SO_3$ dans une première étape de contact,
   IV. absorber le $SO_3$,
   V. réaliser éventuellement d'autres étapes de contact pour poursuivre l'oxydation catalytique du $SO_2$ en $SO_3$ suivie éventuellement d'une absorption de $SO_3$,

   **caractérisé en ce que**, à l'étape I, un flux de gaz principal contenant un gaz de combustion oxygéné est passé à travers le dispositif de combustion et les matières premières soufrées sont amenées, le long du flux de gaz principal dans une pluralité de zones de combustion, au flux de gaz principal où ils s'embrasent, le gaz de traitement étant refroidi entre les zones de combustion, et les matières premières soufrées, qui contiennent des composés azotés, étant brûlées dans la première zone de combustion dans une flamme dans laquelle règnent des conditions réductrices de façon à réprimer la formation d'oxydes d'azote.

2. Procédé selon l'une des revendications précédentes, **caractérisé en ce que** la quantité totale de gaz de combustion, qui est nécessaire à la réaction des matières premières soufrées à l'étape I et à la réaction du dioxyde de soufre à l'étape III et éventuellement à l'étape V, est utilisée à l'étape I, c'est-à-dire est introduite dans le dispositif de combustion.

3. Procédé selon l'une des revendications précédentes, **caractérisé en ce qu'**une partie de l'acide sulfurique produit est amené à contre-courant au gaz de traitement qui passe par lesdites étapes I à IV ou éventuellement à V, pour absorber le $SO_3$ conformément à l'étape IV et éventuellement V et pour sécher le gaz de traitement conformément à l'étape II.

4. Procédé selon l'une des revendications précédentes, **caractérisé en ce qu'**une matière première pauvre en hydrogène et une matière première riche en hydrogène sont brûlées côte à côte, les matières premières et leurs flux dosés étant ajustés entre eux pour régler une concentration spécifique d'acide sulfurique.

5. Procédé selon l'une des revendications précédentes, **caractérisé en ce qu'**une matière première riche en hydrogène et une matière première pauvre en hydrogène sont dosées simultanément dans le dispositif de combustion où elles sont brûlées, les flux dosés de matière première riche en hydrogène et de matière première pauvre en hydrogène étant adaptés entre eux de façon à introduire ou produire dans le procédé 1,227 moles d'eau ou moins par mole de trioxyde de soufre produit dans le procédé.

6. Procédé selon l'une des revendications 4 ou 5, **caractérisé en ce que** la matière première pauvre en hydrogène est du soufre élémentaire.

7. Procédé selon l'une des revendications précédentes, **caractérisé en ce que** du soufre élémentaire est dosée dans la dernière zone de combustion, par référence au sens d'écoulement, afin de réduire le $NO_x$ et/ou de régler une concentration spécifique d'acide sulfurique.

8. Procédé selon l'une des revendications précédentes, **caractérisé en ce qu'**un gaz adoucisseur d'eau, un gaz aminoacide et du soufre élémentaire sont brûlés côte à côte, le gaz adoucisseur d'eau étant introduit de façon dosée dans la première zone de combustion et le soufre élémentaire étant introduit de façon dosée dans la dernière zone de combustion.

9. Procédé selon l'une des revendications précédentes, **caractérisé en ce que** des flux, contenant du dioxyde de soufre et des fractions combustibles telles que du monoxyde de carbone et/ou des fractions organiques, sont introduits de façon dosée dans le dispositif de combustion.

10. Procédé selon l'une des revendications précédentes, **caractérisé en ce que** l'oxydation catalytique de l'étape III est réalisée dans un dispositif de contact à tubes.

11. Procédé selon l'une des revendications précédentes, **caractérisé en ce qu'**une partie du gaz de traitement est ramenée après l'étape IV ou V à l'étage de combustion I.

Figuren

Fig. 1

Fig. 2a

**Fig. 2b**

**Fig. 3**

Fig. 4a

Fig. 4b

Fig. 5

**IN DER BESCHREIBUNG AUFGEFÜHRTE DOKUMENTE**

**In der Beschreibung aufgeführte Patentdokumente**

- DE 1032722 A
- EP 1295849 A2
- WO 2008052649 A1

**In der Beschreibung aufgeführte Nicht-Patentliteratur**

- *Sulphur,* vol. 312, 80-85
- **PRABIR BASU et al.** Boilers and Burner: Design and Theory, Mechanical Engineers Series. Springer-Verlag, 2000
- **A. J. KIDNAY ; WILLIAM R. PARRISH.** Fundamentals of Natural Gas Processing. CRC Press, 2006
- **ARTHUR KOHL ; RICHARD NIELSEN.** Gas Purification. Gulf Publishing Company, 1997